# EUROPÄISCHE PATENTANMELDUNG

(11) **EP 3 944 921 A1**
(43) Veröffentlichungstag der Anmeldung: **02.02.2022**
(21) Anmeldenummer: 21000176.4
(22) Anmeldetag: 01.07.2021
(51) Int. Cl.: B23K 20/04, F16C 33/10, F16C 33/14

(54) **VERFAHREN ZUR HERSTELLUNG EINES GLEITELEMENTS**

(30) Priorität: 31.07.2020 DE 102020004652
(71) Anmelder: Wieland-Werke AG, 89079 Ulm (DE)
(72) Erfinder: Thumm, Gerhard, 89155 Erbach (DE); Voggeser, Volker, 89250 Senden (DE)

(57) **Zusammenfassung**

Die Erfindung betrifft ein Verfahren zur Herstellung eines Gleitelements (1, 11, 13), umfassend folgende Schritte:
a) Bereitstellen eines ersten band- oder streifenförmigen, metallischen Werkstoffs (21) der Dicke D1, wobei der erste Werkstoff (21) Durchbrüche (3) aufweist, die sich über die gesamte Dicke des ersten Werkstoffs (21) erstrecken,
b) Bereitstellen eines zweiten band- oder streifenförmigen, metallischen Werkstoffs (22) der Dicke D2,
c) flächiges Verbinden des ersten band- oder streifenförmigen Werkstoffs (21) mit dem zweiten band- oder streifenförmigen Werkstoff (22) durch Laserwalzplattieren, so dass ein band- oder streifenförmiger Verbundwerkstoff (23) gebildet wird, der eine Längsrichtung X und eine Querrichtung Y aufweist, und senkrecht zur Längs- und zur Querrichtung die Dicke D aufweist,
d) Biegen des Verbundwerkstoffs (23) um eine Achse A, die parallel zur Querrichtung Y des Verbundwerkstoffs (23) orientiert ist, so dass ein Gleitelement (1, 11, 13) gebildet wird, das auf seiner Lauffläche (14) Aussparungen (30) aufweist, die zumindest teilweise aus den Durchbrüchen (3) des ersten Werkstoffs (21) gebildet sind.

## Beschreibung

Die Erfindung betrifft ein Verfahren zur Herstellung eines Gleitelements mit Schmiertaschen.

In Anwendungen mit besonders hohen Belastungen auf die Lagerflächen werden Gleitelemente eingesetzt, die auf der Lauffläche Schmiertaschen aufweisen. Die Schmiertaschen können als Vertiefungen in der Lauffläche oder als Durchbrüche, die sich über die gesamte Dicke des Gleitelements erstrecken, ausgebildet sein. Lochbuchsen (perforated bushings) sind ein Beispiel für solche Gleitelemente.

Bestimmte Kupferlegierungen weisen hervorragende Gleiteigenschaften und eignen sich deshalb als Material für die Lauffläche von Gleitlagern. Aufgrund des hohen Metallpreises von Kupfer sind monometallische Gleitlager aus solchen Werkstoffen teuer. Deshalb werden häufig Verbundwerkstoffe verwendet, bei denen auf einen Stahlrücken eine dünne Auflage aus einem Kupferwerkstoff aufgebracht ist. Der Stahlrücken weist eine deutlich größere Dicke auf als diese Auflage. Im Betrieb nimmt der Stahlrücken die radialen Kräfte auf und sorgt für die mechanische Stabilität des Lagers. Die aus dem Kupferwerkstoff bestehende Auflage auf der Lauffläche des Gleitlagers verleiht dem Lager ausgezeichnete Gleiteigenschaften. Zur Herstellung eines solchen Verbundwerkstoffs sind verschiedene Verfahren bekannt, beispielsweise Aufschmelzen des Kupferwerkstoffs auf den Stahlrücken oder Plattieren. Die Lauffläche eines Gleitlagers aus einem solchen Verbundwerkstoff kann Schmiertaschen aufweisen. Die Druckschrift DE 10 2008 003 730 A1 beschreibt ein derartiges zweilagiges Gleitelement, bei dem die erste Lage durchgehende Durchbrüche aufweist. Diese Durchbrüche dienen als Schmiermittelreservoir.

In der Druckschrift US 6 095 690 A wird vorgeschlagen, Schmiertaschen in ein metallisches Verbundmaterial durch einseitiges Prägen des bimetallischen Bandmaterials einzubringen. Das gleiche Verfahren ist aus der Druckschrift GB 1 454 385 A bekannt. Das beim Prägevorgang verformte Material verbleibt im Gleitelement und kann nicht zurückgewonnen werden.

Alternativ können Schmiertaschen hergestellt werden, indem Durchbrüche in das Verbundmaterial gestanzt werden. Der dabei entstehende Stanzabfall ist jedoch nicht sortenrein und kann deshalb nur mit erheblichem Aufwand recycelt werden. Eine Gleitlagerbuchse, die mit einem solchen Verfahren hergestellt werden kann, ist in der Druckschrift DE 203 00 854 U1 offenbart.

Der Erfindung liegt die Aufgabe zugrunde, ein wirtschaftliches Verfahren zur Herstellung eines kostengünstigen Gleitelements mit Schmiertaschen anzugeben.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung schließt ein Verfahren zur Herstellung eines Gleitelements ein, wobei das Verfahren die folgenden Schritte umfasst:
a) Bereitstellen eines ersten band- oder streifenförmigen, metallischen Werkstoffs der Dicke D1, wobei der erste Werkstoff Durchbrüche aufweist, die sich über die gesamte Dicke D1 des ersten Werkstoffs erstrecken,
b) Bereitstellen eines zweiten band- oder streifenförmigen, metallischen Werkstoffs der Dicke D2,
c) flächiges Verbinden des ersten band- oder streifenförmigen Werkstoffs mit dem zweiten band- oder streifenförmigen Werkstoff durch Laserwalzplattieren, so dass ein band- oder streifenförmiger Verbundwerkstoff gebildet wird, der eine Längsrichtung X und eine Querrichtung Y aufweist, die quer zur Längsrichtung X orientiert ist, und senkrecht zur Längs- und zur Querrichtung die Dicke D aufweist,
d) Biegen des Verbundwerkstoffs um eine Achse A, die parallel zur Querrichtung Y des Verbundwerkstoffs orientiert ist, so dass ein gebogenes Gleitelement gebildet wird, und das Gleitelement auf seiner Lauffläche Aussparungen aufweist, die zumindest teilweise aus den Durchbrüchen des ersten Werkstoffs gebildet sind.

Die Erfindung betrifft ein Verfahren zur Herstellung eines Gleitelements mit Aussparungen, die als Schmiertaschen dienen können. Im Verfahren wird ein erster band- oder streifenförmiger, metallischer Werkstoff bereitgestellt. Der erste Werkstoff weist eine Breite B1 und eine Dicke D1 auf. Die Dicke D1 ist kleiner als die Breite B1. Als streifenförmiger Werkstoff weist er eine bestimmte Länge auf. Als bandförmiger Werkstoff weist er eine unbestimmte Länge auf. Der erste Werkstoff kann aus einem Lagerwerkstoff, insbesondere aus einer Kupfer- oder Aluminiumlegierung sein. Der erste Werkstoff weist mehrere Durchbrüche auf, die sich - wie bei einem Lochblech - über die gesamte Dicke des Werkstoffs erstrecken. Der erste Werkstoff ist somit perforiert.

Ferner wird ein zweiter band- oder streifenförmiger, metallischer Werkstoff bereitgestellt. Der zweite Werkstoff weist eine Breite B2 und eine Dicke D2 auf. Die Dicke D2 ist kleiner als die Breite B2. Als streifenförmiger Werkstoff weist er eine bestimmte Länge auf. Als bandförmiger Werkstoff weist er eine unbestimmte Länge auf. Üblicherweise unterscheidet sich der zweite Werkstoff vom ersten Werkstoff. Für den zweiten Werkstoff wird vorteilhafterweise ein günstiger Werkstoff mit hoher Festigkeit gewählt. Der zweite Werkstoff kann insbesondere aus Stahl sein. Bevorzugt ist die Dicke D2 des zweiten metallischen Werkstoffs größer als die Dicke D1 des ersten metallischen Werkstoffs. Besonders bevorzugt ist die Dicke D2 des zweiten Werkstoffs mindestens dreimal so groß wie die Dicke D1 des ersten Werkstoffs. Somit können auf wirtschaftliche Weise dickwandige Gleitelemente hergestellt werden.

Der erste und der zweite Werkstoff werden durch Laserwalzplattieren so miteinander verbunden, dass ein band- oder streifenförmiger Verbundwerkstoff gebildet wird. Beim Laserwalzplattieren werden zwei band- oder streifenförmige Werkstoffe vor einem Walzgerüst flächig zusammengeführt und unmittelbar vor Eintritt in das Walzwerkzeug mittels Laserstrahlung erwärmt. Aufgrund der Erwärmung findet während des Walzvorgangs eine rasche intermetallische Diffusion zwischen den beiden Werkstoffen statt, so dass ein fester metallischer Verbund bereits bei einem geringen Umformgrad während des Walzvorgangs entsteht. Das Laserwalzplattieren kann anhand der Lehre der Druckschrift DE 44 29 913 C1 durchgeführt werden.

Der so gebildete Verbundwerkstoff weist eine Längsrichtung X und eine Querrichtung Y auf. Ein streifenförmiger Verbundwerkstoff mit einer bestimmten Länge wird aus einem streifenförmigen ersten Werkstoff und einem streifenförmigen zweiten Werkstoff hergestellt. Alternativ wird ein bandförmiger Verbundwerkstoff aus einem bandförmigen ersten Werkstoff und einem bandförmigen zweiten Werkstoff hergestellt. Der bandförmige Verbundwerkstoff wird anschließend auf eine endliche Länge abgelängt. Aufgrund des geringen Umformgrads, der beim Laserwalzplattieren erforderlich ist, ist die Dicke D des Verbundwerkstoffs nur geringfügig kleiner als die Summe der Dicken D1 und D2 der beiden Ausgangswerkstoffe.

Das Gleitelement wird aus dem band- oder streifenförmigen Verbundwerkstoff hergestellt, indem der Verbundwerkstoff um eine Achse gebogen wird, die parallel zur Querrichtung des Werkstoffverbunds orientiert ist. Das Gleitelement weist eine äußere und eine innere Oberfläche auf, wovon eine als Lauffläche dient. Die Durchbrüche des ersten Werkstoffs bilden auf einer Seite des Verbundwerkstoffs Aussparungen. Deshalb weist die Lauffläche des Gleitlagers Aussparungen auf, die zumindest teilweise aus den Durchbrüchen des ersten Werkstoffs gebildet sind. Diese Aussparungen können als Schmiertaschen dienen.

Der besondere Vorteil des Verfahrens besteht darin, dass aufgrund des geringen Umformgrads beim Laserwalzplattieren die jeweilige Dicke der Ausgangswerkstoffe kaum reduziert wird und dass das Material des zweiten Werkstoffs während des Plattierprozesses nicht oder nur unwesentlich in die Durchbrüche des ersten Werkstoffs gedrückt wird. Die Durchbrüche des ersten Werkstoffs bleiben somit in ihrer ursprünglichen Form und Tiefe im Wesentlichen erhalten. Dies ist bei Plattierverfahren, die einen größeren Umformgrad erfordern, nicht der Fall. Ferner kann die Tiefe der aus den Durchbrüchen gebildeten Aussparungen durch die Dicke D1 des ersten Werkstoffs eingestellt werden. Da beim Laserwalzplattieren die Dicke der Ausgangsmaterialien in einem weiten Bereich gewählt werden kann, ist es möglich, einen Verbundwerkstoff mit Schmiertaschen mit nahezu beliebiger Tiefe herzustellen.

Ein weiterer Vorteil dieses Verfahrens besteht darin, dass die Durchbrüche vor dem Plattieren und somit in einen monometallischen Werkstoff eingebracht werden. Der dabei entstehende Materialabfall ist somit sortenrein und kann problemlos im Schrottkreislauf wieder verwertet werden.

Bei einer besonderen Ausführungsform des Verfahrens können die Durchbrüche des ersten Werkstoffs an der Grenzfläche der beiden Werkstoffe durch den zweiten Werkstoff verschlossen werden. In diesem Fall bilden sie nach dem Plattierprozess einseitig offene Aussparungen in Form von Taschen, deren Tiefe sich nur über die Dicke des ersten Werkstoffs erstreckt.

Insbesondere kann der Verbundwerkstoff zu einer Buchse, also einem hülsenförmigen Körper gebogen werden. In diesem Fall erfolgt das Biegen so, dass die beiden Enden des Verbundwerkstoffs zusammengeführt werden, wobei eine Stoßfuge gebildet wird, die parallel zur Biegeachse verläuft. Alternativ kann der band- oder streifenförmige Verbundwerkstoff zu einer Halbschale gebogen werden, die einen Winkel von ungefähr 180° einschließt.

Bevorzugt erfolgt das Biegen so, dass sich der erste metallische Werkstoff auf der der Biegeachse A zugewandten Oberfläche des Gleitelements, also auf der Innenseite der Buchse beziehungsweise der Halbschale befindet. Die Innenseite der Buchse dient dann als Lauffläche des Gleitelements.

In bevorzugter Ausgestaltung der Erfindung kann das Verbinden des ersten Werkstoffs mit dem zweiten Werkstoff in Schritt c) vollflächig erfolgen. Hierfür muss die Breite B1 des ersten Werkstoffs gleich der Breite B2 des zweiten Werkstoffs sein. Der so gebildete Verbundwerkstoff hat dann eine einheitliche Breite B. Der für das Gleitelement zur Verfügung stehende Bauraum wird optimal ausgenutzt.

Vorteilhafterweise können die Aussparungen mit einem Schmierstoff, insbesondere einem Festschmierstoff, gefüllt werden. Der Schmierstoff verbessert die Gleiteigenschaften des Lagers. Wenn die Aussparungen als einseitig offene Taschen ausgebildet sind, deren Tiefe sich nur über die Dicke D1 des ersten Werkstoffs erstreckt, wird zur Füllung der Aussparungen deutlich weniger Schmierstoff benötigt als bei Gleitelementen, die Durchbrüche aufweisen, die sich über die gesamte Dicke D des Verbundwerkstoffs erstrecken.

Im Rahmen einer besonderen Ausführungsform des Verfahrens kann der zweite Werkstoff Durchbrüche aufweisen, die sich über die gesamte Dicke des zweiten Werkstoffs erstrecken. Die Aussparungen des zweiten Werkstoffs führen zu einer signifikanten Materialeinsparung und somit auch zu einer Reduzierung des Gewichts des Gleitelements. Die Aussparungen des zweiten Werkstoffs können in Form und Größe identisch zu den Aussparungen des ersten Werkstoff sein oder sich in Form und/oder Größe von den Aussparungen des ersten Werkstoffs unterscheiden.

Im Rahmen einer speziellen Ausgestaltung dieser Ausführungsform kann der erste Werkstoff so mit dem zweiten Werkstoff verbunden werden, dass die Durchbrüche des zweiten Werkstoffs mit den Durchbrüchen des ersten Werkstoffs zusammenfallen. Die Durchbrüche des ersten und des zweiten Werkstoffs liegen quasi übereinander. Mit anderen Worten, sie decken sich. Die Aussparungen erstrecken sich dann über die gesamte Dicke D des Verbundwerkstoffs. Die aus einem solchen Verbundwerkstoff hergestellten Gleitelemente besitzen Schmiertaschen mit maximalem Volumen.

Im Rahmen einer weiteren speziellen Ausgestaltung dieser Ausführungsform kann der erste Werkstoff so mit dem zweiten Werkstoff verbunden werden, dass die Durchbrüche des zweiten Werkstoffs zu den Durchbrüchen des ersten Werkstoffs versetzt angeordnet sind. Die Durchbrüche des ersten Werkstoffs werden dann an der Grenzfläche der beiden Werkstoffe durch den zweiten Werkstoff verschlossen. In diesem Fall bilden die Durchbrüche des ersten Werkstoffs nach dem Plattierprozess einseitig offene Aussparungen in Form von Taschen, deren Tiefe sich nur über die Dicke D1 des ersten Werkstoffs erstreckt. Die aus einem solchen Verbundwerkstoff hergestellten Gleitelemente besitzen eine maximale Stabilität bei geringem Gewicht. Insbesondere bei dieser speziellen Ausgestaltung der Ausführungsform der Erfindung können sich die Aussparungen des zweiten Werkstoffs in Form und/oder Größe von den Aussparungen des ersten Werkstoffs unterscheiden.

Hinsichtlich der relativen Position der Durchbrüche des ersten Werkstoffs zu den Durchbrüchen des zweiten Werkstoffs kann jede Variante, die zwischen den beiden vorstehend beschriebenen, speziellen Ausgestaltungen liegt, in Betracht gezogen werden. Insbesondere kann das Verbinden der beiden Werkstoffe so erfolgen, dass die Durchbrüche des ersten Werkstoffs mit den Durchbrüchen des zweiten Werkstoffs teilweise überlappen.

Hinsichtlich weiterer technischer Merkmale und Vorteile des erfindungsgemäßen Verfahrens wird hiermit explizit auf die Ausführungsbeispiele, die Figuren sowie auf die Erläuterungen im Zusammenhang mit der Figurenbeschreibung und der Ausführungsbeispiele verwiesen.

Ausführungsbeispiele der Erfindung werden anhand der schematischen Zeichnungen der Figuren näher erläutert.

Darin zeigen:
- Fig. 1: einen ersten Werkstoff mit Durchbrüchen
- Fig. 2: einen zweiten Werkstoff
- Fig. 3: schematisch den Prozess des Laserwalzplattierens
- Fig. 4: einen Verbundwerkstoff
- Fig. 5: eine Buchse mit Schmiertaschen
- Fig. 6: eine Halbschale mit Schmiertaschen
- Fig. 7: eine besondere Ausführungsform des Verbundwerkstoffs
- Fig. 8: eine weitere besondere Ausführungsform des Verbundwerkstoffs

Einander entsprechende Teile sind in allen Figuren mit denselben Bezugszeichen versehen.

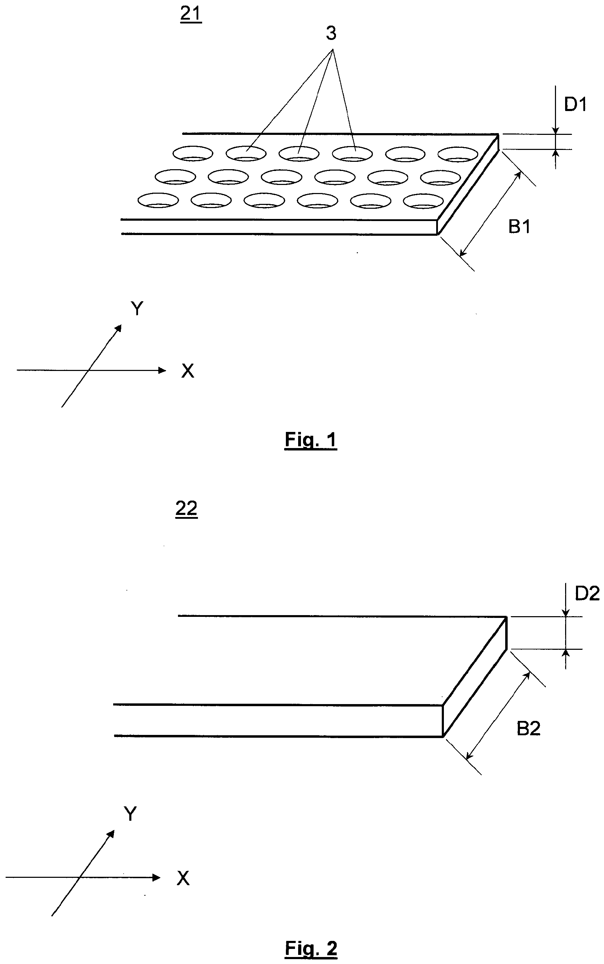

Fig. 1 zeigt einen ersten Werkstoff 21 als ein Bandmaterial der Breite B1 und der Dicke D1. Der bandförmige Werkstoff erstreckt sich in unbestimmter Länge in X-Richtung. Die Breite B1 wird in Y-Richtung gemessen. Die Dicke D1 wird in einer Richtung gemessen, die senkrecht zu X und Y ist. Der Werkstoff weist eine Vielzahl von Durchbrüchen 3 auf. Die Durchbrüche 3 können wie im dargestellten Fall eine runde Form aufweisen. Andere Formen, wie beispielsweise ovale, längliche, dreieckige oder rechteckige sind auch möglich.
Fig. 2 zeigt einen zweiten Werkstoff 22 als ein Bandmaterial der Breite B2 und der Dicke D2. Der bandförmige Werkstoff erstreckt sich in unbestimmter Länge in X-Richtung. Die Breite B2 wird in Y-Richtung gemessen. Die Dicke D2 wird in einer Richtung gemessen, die senkrecht zu X und Y ist. Der zweite Werkstoff 22 ist im dargestellten Fall als massiver Werkstoff ausgeführt und weist ebene Oberflächen auf. Es sind weder Durchbrüche noch sonstige Strukturelemente vorhanden.

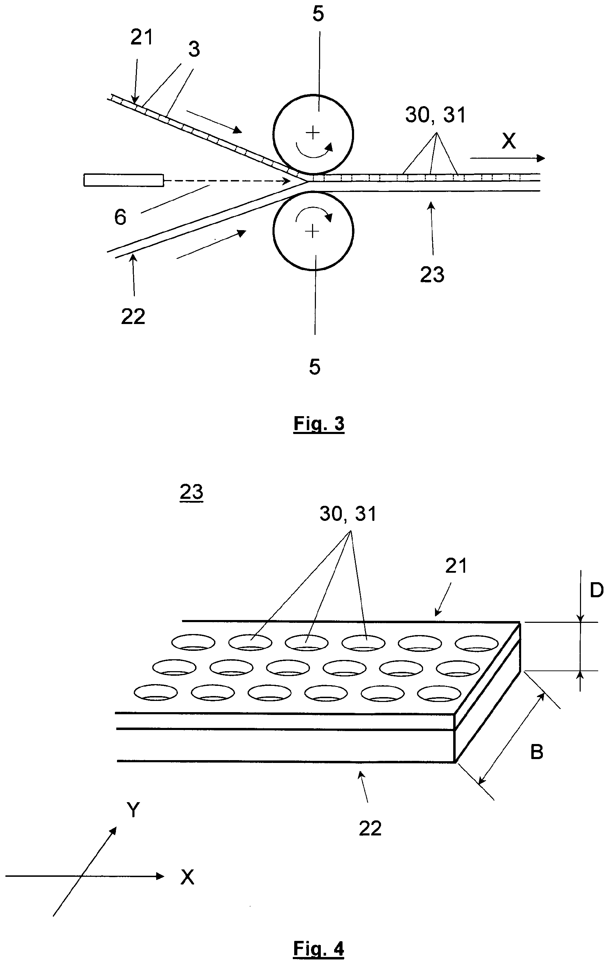

Fig. 3 zeigt schematisch den Prozess des Laserwalzplattierens. Die Arbeitsrichtung ist von links nach rechts. Ein erster Werkstoff 21, der wie in Fig. 1 Durchbrüche 3 aufweist, wird als quasi endloses Band einer Walzvorrichtung zugeführt, von der nur die beiden gegensinnig rotierenden Walzwerkzeuge 5 dargestellt sind. Ein zweiter Werkstoff 22 gemäß Fig. 2 wird als quasi endloses Band ebenso der Walzvorrichtung zugeführt. Die beiden Werkstoffe 21, 22 werden so zugeführt, dass sie vor den Walzwerkzeugen 5 in flächigen Kontakt miteinander treten. Unmittelbar vor Eintritt der beiden Werkstoffe 21, 22 in den Arbeitsbereich der Walzwerkzeuge 5 werden beide Werkstoffe 21, 22 durch einen Laserstrahl 6 erwärmt. Aufgrund der somit erzielten hohen Temperatur der Werkstoffe 21, 22 findet während des Plattierprozesses eine schnelle intermetallische Diffusion zwischen den beiden Werkstoffen 21, 22 statt. Deshalb wird während des Plattierprozesses nur ein sehr geringer Umformgrad benötigt, um eine ausreichend starke stoffschlüssige Verbindung zwischen den beiden Werkstoffen 21, 22 zu erzielen. Der so hergestellte bandförmige Verbundwerkstoff 23 weist auf einer seiner Oberflächen Aussparungen 30 in Form von einseitig offenen Taschen 31 auf, die den Durchbrüchen 3 des ersten Werkstoffs 21 entsprechen.
Fig. 4 zeigt den hergestellten Verbundwerkstoff 23. Er besteht aus dem ersten Werkstoff 21 und dem zweiten Werkstoff 22. Die Breite B des Verbundwerkstoffs 23 ist gleich der Breite B1 der ersten Werkstoffs 21 und der hierzu identischen Breite B2 des zweiten Werkstoffs 22. Die Dicke D des Verbundwerkstoffs ist ungefähr gleich der Summe der Dicke D1 des ersten Werkstoffs 21 und D2 des zweiten Werkstoffs 22. Der Verbundwerkstoff 23 weist auf der Oberfläche, die durch den ersten Werkstoff 21 gebildet wird, eine Vielzahl von Aussparungen 30 in Form von einseitig offenen Taschen 31 auf. Diese sind aus den Durchbrüchen 3 des ersten Werkstoffs 21 entstanden, indem die Durchbrüche 3 einseitig durch den zweiten Werkstoff 22 verschlossen wurden.

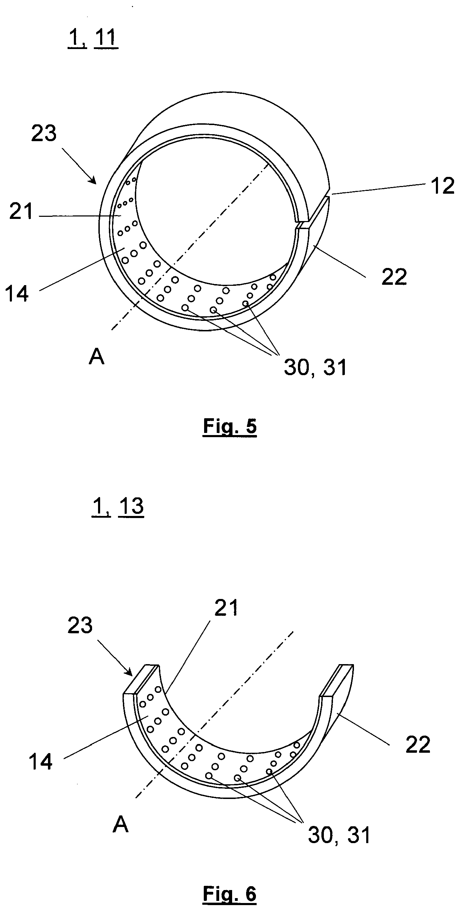

Fig. 5 zeigt ein Gleitelement 1 in Form einer gerollten Buchse 11. Zur Herstellung der Buchse 11 wurde der Verbundwerkstoff 23 gemäß Fig. 4 auf eine dem äußeren Umfang der Buchse 11 entsprechende Länge abgelängt und um die Achse A um nahezu 360° gebogen. Zwischen den beiden Enden des Verbundwerkstoffs 23 bleibt eine kleine Stoßfuge 12. Die Buchse 11 weist eine innere Oberfläche als Lauffläche 14, die aus dem ersten Werkstoff 21 gebildet wird, und eine äußere Oberfläche auf, die aus dem zweiten Werkstoff 22 gebildet wird. Die Lauffläche 14 weist somit Taschen 31 auf, die mit Festschmierstoff gefüllt werden können. Alternativ ist es auch möglich, den Verbundwerkstoff 23 so zu biegen, dass die äußere Oberfläche durch den ersten Werkstoff 21 gebildet wird und somit Schmiertaschen 31 aufweist.
Fig. 6 zeigt ein Gleitelement 1 in Form einer Halbschale 13. Zur Herstellung der Halbschale 13 wurde der Verbundwerkstoff 23 gemäß Fig. 4 auf eine dem Umfang der Halbschale 13 entsprechende Länge abgelängt und um die Achse A um nahezu 180° gebogen. Die Halbschale 13 weist eine innere Oberfläche als Lauffläche 14, die aus dem ersten Werkstoff 21 gebildet wird, und eine äußere Oberfläche auf, die aus dem zweiten Werkstoff 22 gebildet wird. Die Lauffläche 14 weist somit Taschen 31 auf, die mit Festschmierstoff gefüllt werden können. Alternativ ist es auch möglich, den Verbundwerkstoff 23 so zu biegen, dass die äußere Oberfläche durch den ersten Werkstoff 21 gebildet wird und somit Schmiertaschen 31 aufweist.

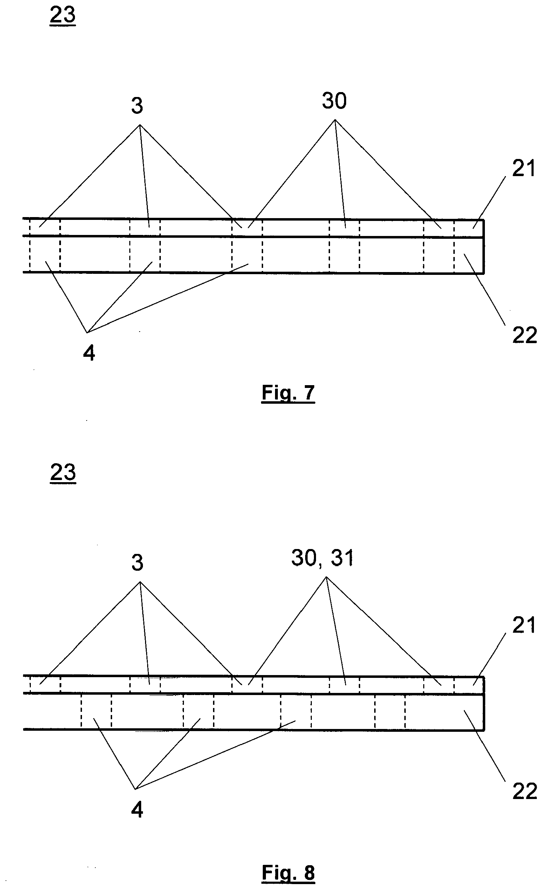

Fig. 7 zeigt schematisch eine Seitenansicht einer besonderen Ausführungsform des Verbundwerkstoffs 23. Nicht nur der erste Werkstoff 21, sondern auch der zweite Werkstoff 22 weist Durchbrüche 4 auf, die die gleiche Form und Größe wie die Durchbrüche 3 des ersten Werkstoffs haben. Der erste Werkstoff 21 wurde so mit dem zweiten Werkstoff 22 verbunden, dass die Durchbrüche 4 des zweiten Werkstoffs 22 mit den Durchbrüchen 3 des ersten Werkstoffs zusammenfallen. Auf diese Weise wurden Aussparungen 30 gebildet, die sich mit gleichbleibender Form und Größe über die gesamte Dicke des Verbundwerkstoffs 23 erstrecken. Als Schmiermittelreservoir weisen diese Aussparungen 30 ein maximales Volumen für den Schmierstoff auf.
Fig. 8 zeigt schematisch eine Seitenansicht einer weiteren besonderen Ausführungsform des Verbundwerkstoffs 23. Nicht nur der erste Werkstoff 21, sondern auch der zweite Werkstoff 22 weist Durchbrüche 4 auf. Der erste Werkstoff 21 wurde so mit dem zweiten Werkstoff 22 verbunden, dass die Durchbrüche 4 des zweiten Werkstoffs 22 zu den Durchbrüchen 3 des ersten Werkstoffs 21 versetzt angeordnet sind. Die Durchbrüche 3 des ersten Werkstoffs 21 sind wie bei dem in Fig. 4 dargestellten Verbundwerkstoff 23 durch den zweiten Werkstoff 22 an der Grenzfläche der beiden Werkstoffe 21, 22 verschlossen, so dass in der durch den ersten Werkstoff 21 gebildeten Oberfläche des Verbundwerkstoffs 23 Aussparungen 30 in Form von einseitig offenen Taschen 31 gebildet sind.

### Bezugszeichenliste

- 1: Gleitelement
- 11: Buchse
- 12: Stoßfuge
- 13: Halbschale
- 14: Lauffläche
- 21: erster Werkstoff
- 22: zweiter Werkstoff
- 23: Verbundwerkstoff
- 3: Durchbruch
- 30: Aussparung
- 31: Tasche
- 4: Durchbruch
- 5: Walzwerkzeug
- 6: Laserstrahl

- A: Achse
- B: Breite
- D: Dicke
- X: Längsrichtung
- Y: Querrichtung

## Patentansprüche

1. Verfahren zur Herstellung eines Gleitelements (1, 11, 13), umfassend folgende Schritte:
a) Bereitstellen eines ersten band- oder streifenförmigen, metallischen Werkstoffs (21) der Dicke D1, wobei der erste Werkstoff (21) Durchbrüche (3) aufweist, die sich über die gesamte Dicke D1 des ersten Werkstoffs (21) erstrecken,
b) Bereitstellen eines zweiten band- oder streifenförmigen, metallischen Werkstoffs (22) der Dicke D2,
c) flächiges Verbinden des ersten band- oder streifenförmigen Werkstoffs (21) mit dem zweiten band- oder streifenförmigen Werkstoff (22) durch Laserwalzplattieren, so dass ein band- oder streifenförmiger Verbundwerkstoff (23) gebildet wird, der eine Längsrichtung X und eine Querrichtung Y aufweist, und senkrecht zur Längs- und zur Querrichtung die Dicke D aufweist,
d) Biegen des Verbundwerkstoffs (23) um eine Achse A, die parallel zur Querrichtung Y des Verbundwerkstoffs (23) orientiert ist, so dass ein Gleitelement (1, 11, 13) gebildet wird, das auf seiner Lauffläche (14) Aussparungen (30) aufweist, die zumindest teilweise aus den Durchbrüchen (3) des ersten Werkstoffs (21) gebildet sind.

2. Verfahren nach Anspruch 1, **dadurch gekennzeichnet, dass** das Verbinden des ersten Werkstoffs (21) mit dem zweiten Werkstoff (22) in Schritt c) vollflächig erfolgt.

3. Verfahren nach einem der Ansprüche 1 oder 2, **dadurch gekennzeichnet, dass** die Aussparungen (30) mit einem Schmierstoff, insbesondere einem Festschmierstoff, gefüllt werden.

4. Verfahren nach einem der Ansprüche 1 bis 3, **dadurch gekennzeichnet, dass** der zweite Werkstoff (22) Durchbrüche (4) aufweist, die sich über die gesamte Dicke des zweiten Werkstoffs (22) erstrecken.

5. Verfahren nach Anspruch 4, **dadurch gekennzeichnet, dass** der erste Werkstoff (21) so mit dem zweiten Werkstoff (22) verbunden wird, dass die Durchbrüche (4) des zweiten Werkstoffs (22) mit den Durchbrüchen (3) des ersten Werkstoffs (21) zusammenfallen.

6. Verfahren nach Anspruch 4, **dadurch gekennzeichnet, dass** der erste Werkstoff (21) so mit dem zweiten Werkstoff (22) verbunden wird, dass die Durchbrüche (4) des zweiten Werkstoffs (22) zu den Durchbrüchen (3) des ersten Werkstoffs (21) versetzt angeordnet sind.
